(19) **Europäisches Patentamt**
**European Patent Office**
**Office européen des brevets**

(11) **EP 3 909 656 A1**

(12) **EUROPEAN PATENT APPLICATION**
published in accordance with Art. 153(4) EPC

(43) Date of publication:
**17.11.2021 Bulletin 2021/46**

(21) Application number: **19912993.3**

(22) Date of filing: **26.12.2019**

(51) Int Cl.:
*A63F 13/54* (2014.01)          *H04S 7/00* (2006.01)

(86) International application number:
**PCT/CN2019/128908**

(87) International publication number:
**WO 2020/155976 (06.08.2020 Gazette 2020/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.01.2019 CN 201910103595**

(71) Applicant: **Huawei Technologies Co., Ltd.
Shenzhen, Guangdong 518129 (CN)**

(72) Inventors:
• **WANG, Bin**
**Shenzhen, Guangdong 518129 (CN)**
• **GIBBS, Jonathan Alastair**
**Widermere, Cumbria CA11 (GB)**

(74) Representative: **Epping - Hermann - Fischer
Patentanwaltsgesellschaft mbH
Schloßschmidstraße 5
80639 München (DE)**

(54) **AUDIO SIGNAL PROCESSING METHOD AND APPARATUS**

(57)     An audio signal processing method and apparatus are disclosed. The method includes: acquiring at least one audio signal that meets a screening condition at a listening position (S403), where the screening condition includes one or more of the following conditions: volume at the listening position is greater than or equal to a volume threshold, a listening distance between the sound source and the listening position is less than or equal to a preset listening distance, or the sound source is in a range corresponding to a listening orientation; encoding the acquired audio signal to obtain an encoded audio signal (S404); and sending the encoded audio signal to a decoder side (S405). The method can reduce decoding power consumption while ensuring audio signal quality.

FIG. 4

**Description**

This application claims priority to Chinese Patent Application No. 201910103595.6, filed with the China National Intellectual Property Administration on January 31, 2019, and entitled "AUDIO SIGNAL PROCESSING METHOD AND APPARATUS", which is incorporated herein by reference in its entirety.

**TECHNICAL FIELD**

Embodiments of this application relate to the field of audio signal processing, and in particular to an audio signal processing method and apparatus.

**BACKGROUND**

With rapid development of high-performance computers and signal processing technologies, people raise increasingly high requirements for voice and audio experience. Immersive audio can meet people's requirements for the voice and audio experience. For example, 4th generation mobile communications technology (the 4th generation mobile communication technology, 4G)/5th generation mobile communications technology (the 5th generation mobile communication technology, 5G) communications voice, audio service, virtual reality (virtual reality, VR), augmented reality (Augmented reality, AR), mixed reality (Mixed Reality, MR), and other video and audio technologies are gaining popularity. An immersive video and audio system requires not only a stunning visual effect but also a realistic auditory effect. Audio-visual fusion can greatly improve immersive experience.

A core of audio is a three-dimensional audio technology. Currently, three-dimensional audio is implemented by using a plurality of reproduction methods, including speaker-based speaker reproduction and headphone-based binaural reproduction. Head-related transfer function (head related transfer function, HRTF) or binaural room impulse response (binaural room impulse response, BRIR) is used to implement headphone-based binaural reproduction. When a sound wave generated by an HRTF reference sound source is propagated to an ear canal, the sound wave is reproduced under impact of scattering, reflection, and refraction of organs such as the head, the body, and an auricle. In a case of BRIR, the sound wave is reproduced based on impact of ambient reflection on the sound source. BRIR can be considered as a pulse response of a system composed of the sound source, indoor environment, and two ears (including the head, the body, and the auricle). The BRIR includes direct sound, early reflection, and late reverberation. Principles of headphone-based binaural reproduction are as follows: After it is assumed that a sound source is at a position, convolution processing is performed based on an HRTF or a BRIR corresponding to a distance from the position to a center position of a listener's head, to obtain output signals to two ears.

In a current three-dimensional audio technology, a corresponding device is selected based on an applying scenario to acquire audio signals corresponding to all wanted sound sources in a sound field, encode all the acquired audio signals, and transmit encoded audio signals to a decoder side. The decoder side decodes the audio signals, and then renders the decoded audio signals based on a playing device selected as a player. However, when there are a large quantity of sound sources in the sound field, power consumption of the decoder side is very high.

**SUMMARY**

Embodiments of this application provide an audio signal processing method and apparatus, to reduce decoding power consumption while ensuring audio signal quality.

To achieve the foregoing objective, the following technical solutions are used in the embodiments of this application. According to a first aspect of this application, an audio signal processing method is provided and is applied to an encoder side. The method may include: first acquiring at least one audio signal at a listening position, where each of the at least one acquired audio signal has a corresponding sound source, and the at least one acquired audio signal includes at least an audio signal that meets a screening condition; the screening condition may include one or more of the following conditions: volume at the listening position is greater than or equal to a volume threshold, a listening distance between the sound source corresponding to the audio signal and the listening position is less than or equal to a preset listening distance, or the sound source corresponding to the audio signal is in a range corresponding to a listening orientation; encoding the acquired audio signal to obtain an encoded audio signal; and then sending the encoded audio signal to a decoder side.

According to the audio signal processing method provided in this application, at least the audio signal that meets the screening condition at the listening position is acquired, and the acquired audio signal is encoded and sent to the decoder side, so that the decoder side decodes and plays the audio signal. In this way, the encoder side may acquire only the audio signal that meets the screening condition, and encode and send the audio signal, so that the decoder side decodes only the audio signal that meets the screening condition. Therefore, the screening condition for ensuring audio signal quality may be configured. When there are a relatively large quantity of sound sources, transmission of audio signals not only ensures audio signal quality, but also greatly reduces power consumption of the decoder side. It should be noted that the solutions provided in this application may be applied to a sound field, or certainly may be applied to another applying scenario, for example, a game scenario, a movie scenario, or a conference scenario. The encoder side described in this application refers to a part that is in an audio and video system and that encodes an audio signal corresponding to a sound source. The encoder side acquires and encodes the audio signal corresponding to the sound source, and transmits an encoded audio signal to the decoder side. The decoder side decodes and renders the audio signal, and then plays the audio signal. The audio and video system includes but is not limited to a VR system, an AR system, an MR system, or another streaming transmission system. A type of the audio and video system to which the solutions provided in this application are applied is not specifically limited in this application. Specifically, audio signal processing includes a real-time audio signal processing scenario and a non-real-time audio signal processing scenario. In either of the scenarios, due to mobility of a user, neither a listening position nor a listening orientation is fixed. The range corresponding to the listening orientation may include a range of all orientations or a range of a preset angle. This is not specifically limited in this application.

In the real-time audio signal processing scenario, a listening position is a position at which a listener is currently located in a sound field, and a listening orientation is an orientation toward which the listener at the listening position faces. The listening position and/or the listening orientation are both provided by the decoder side to the encoder side. The encoder side processes, based on the listening position and/or the listening orientation provided by the decoder side, an audio signal in a synchronous acquisition and transmission manner, to implement realistic restoration of a sound field and to provide immersive experience to the listener. In the non-real-time audio signal processing scenario, a listening position is any possible position in a sound field, and a listening orientation is any possible orientation. With reference to the first aspect, in a possible implementation, in the real-time audio signal processing scenario, the audio signal processing method provided in this application may further include: receiving listening position information sent by the decoder side, where the listening position information is used to indicate the listening position. With reference to any one of the first aspect or the possible implementation of the first aspect, in another possible implementation, when the listening orientation needs to be used in the screening condition, for example, when the screening condition includes that a corresponding sound source is in a range corresponding to the listening orientation, in the real-time audio signal processing scenario, the audio signal processing method provided in this application may further include: receiving listening orientation information sent by the decoder side, where the listening orientation information is used to indicate the listening orientation.

With reference to the first aspect or any one of the foregoing possible implementations, in another possible implementation, in the non-real-time audio signal processing scenario, a plurality of listening positions are preset or determined, and there are a plurality of listening orientations at each listening position. The encoder side needs to perform the audio signal processing method provided in this application to acquire and encode an audio signal at each listening position. The decoder side selects, based on an actual position of the listener, a matched encoded audio signal to perform decoding and rendering, to provide immersive experience to the listener.

With reference to the first aspect or any one of the foregoing possible implementations, in another possible implementation, in the non-real-time audio signal processing scenario, the listening orientation may be any listening orientation at any listening position. When the screening condition includes content related to the listening orientation, the encoder side needs to obtain an audio signal corresponding to any listening orientation. The decoder side may obtain, from the encoder side, an audio signal that meets a current screening condition, to restore a sound field. The encoder side obtains a plurality of audio signals in each listening orientation in advance, so that when the listener is in any listening orientation, a decoder may obtain, from the encoder side, an audio signal corresponding to the current listening orientation of the listener, to provide immersive experience to the listener.

With reference to the first aspect or any one of the foregoing possible implementations, in another possible implementation, only an audio signal whose volume exceeds a specific threshold can be heard. The threshold varies with a position relationship between a sound source and a listening orientation. A volume threshold may be configured as a threshold determined based on a position relationship between a sound source corresponding to an audio signal and a listening orientation. In this implementation, different thresholds are configured for different position relationships, so that a listening requirement is more accurately met, and a listening effect is more realistic.

With reference to the first aspect or any one of the foregoing possible implementations, in another possible implementation, only an audio signal whose volume exceeds a specific threshold can be heard. A volume threshold may be configured as a preset volume threshold, to acquire a high-volume sound source signal.

With reference to the first aspect or any one of the foregoing possible implementations, in another possible implementation, the audio signal processing method provided in this application may further include: The encoder side acquires audio signals corresponding to all sound sources at the listening position, encodes all the acquired audio signals to obtain encoded audio signals, sends the encoded audio signals to the decoder side, and sends indication information to the decoder side, where the indication information is used to indicate the audio signal that meets the screening condition and that is in the encoded audio signal. The decoder side decodes, according to the indication information, only the audio signal that meets the screening condition. In this way, the decoder side decodes only the audio signal that corresponds to the sound source at the listening position and that meets the screening condition. With reference to the first aspect or any one of the foregoing possible implementations, in another possible implementation, the indication information may include characteristic information of each audio signal in the encoded audio signal, where the characteristic information includes volume information or position information of a sound source corresponding to the audio signal. The decoder side selects, based on the characteristic information, the audio signal that meets the screening condition to perform decoding.

With reference to the first aspect or any one of the foregoing possible implementations, in another possible implementation, the indication information may include an identifier of the audio signal that meets the screening condition and that is in the encoded audio signal.

According to a second aspect of this application, an audio signal processing method is provided and is applied to a decoder side. The method may include: receiving a plurality of encoded audio signals, where the plurality of audio signals are audio signals at a listening position, each audio signal has a corresponding sound source, and the plurality of audio signals include at least an audio signal that meets a screening condition; the screening condition includes one or more of the following conditions: volume at the listening position is greater than or equal to a volume threshold, a listening distance between the sound source corresponding to the audio signal and the listening position is less than or equal to a preset listening distance, or the sound source corresponding to the audio signal is in a range corresponding to a listening orientation; decoding the audio signal that meets the screening condition, to obtain a decoded signal; and rendering the decoded signal based on a sound channel transfer function in a playing device to obtain an output signal According to the audio signal processing method provided in this application, the decoder side decodes only the audio signal that corresponds to the sound source and that meets the screening condition. When there are a relatively large quantity of sound sources, as long as a screening condition for ensuring audio quality is configured, transmission of audio signals not only ensures audio signal quality, but also greatly reduces power consumption of the decoder side. It should be noted that the listening position and the listening orientation have been described in detail in the first aspect, and details are not described herein again.

With reference to the second aspect, in a possible implementation, the rendering the decoded signal based on a sound channel transfer function in a playing device to obtain an output signal includes: performing convolution on each decoded signal based on a sound channel transfer function of the decoded signal in the playing device, to obtain one or more output signals.

With reference to any one of the second aspect or the possible implementation of the second aspect, in another possible implementation, in a real-time audio signal processing scenario, the audio signal processing method provided in this application may further include: The decoder side sends listening position information to the encoder side, so that the encoder side obtains, based on the listening position information, the plurality of encoded audio signals, where the listening position information is used to indicate the listening position.

With reference to the second aspect or any one of the foregoing possible implementations, in another possible implementation, when the listening orientation needs to be used in the screening condition, for example, when the screening condition includes that a sound source corresponding to the audio signal is in a range corresponding to the listening orientation, in the real-time audio signal processing scenario, the audio signal processing method provided in this application may further include: The decoder side sends listening orientation information to the encoder side, so that the encoder side obtains the plurality of encoded audio signals based on the orientation information, where the listening orientation information is used to indicate the listening orientation.

With reference to the second aspect or any one of the foregoing possible implementations, in another possible implementation, in a non-real-time audio signal processing scenario, the listening position is any position in an applying scenario, for example, in a sound field. Therefore, in the non-real-time audio signal processing scenario, a plurality of listening positions need to be preset or determined, and there are a plurality of listening orientations at each listening position. The encoder side needs to perform the audio signal processing method provided in this application to acquire and encode an audio signal at each listening position. The decoder side may obtain a corresponding audio signal from the encoder side based on a current listening position of the listener, perform the audio signal processing method provided in this application to restore a sound field, and obtain an audio signal at each listening position in advance. Therefore, when the listener is at any position, the decoder side may obtain, from the encoder side, an encoded audio signal at the current listening position and decode the audio signal, to provide immersive experience to the listener.

With reference to the second aspect or any one of the foregoing possible implementations, in another possible implementation, in the non-real-time audio signal processing scenario, the listening orientation may be any listening orientation at any listening position. When the screening condition includes content related to the listening orientation, the encoder side needs to obtain an encoded audio signal that corresponds to any listening orientation. The decoder side may obtain, from the encoder side, the audio signal that meets the screening condition, to restore the sound field. The encoder side obtains an audio signal in each listening orientation in advance, so that when the listener is in any listening orientation, the decoder side may obtain, from the encoder side, an audio signal corresponding to the current listening orientation, to provide immersive experience to the listener.

With reference to the second aspect or any one of the foregoing possible implementations, in another possible implementation, only an audio signal whose volume exceeds a specific threshold can be heard. The threshold varies with a position relationship between a sound source and a listening orientation. A volume threshold may be configured as a threshold determined based on a position relationship between a sound source and a listening orientation. In this implementation, different thresholds are configured for different position relationships, so that a listening requirement is more accurately met, and a listening effect is more realistic.

With reference to the second aspect or any one of the foregoing possible implementations, in another possible implementation, only an audio signal whose volume exceeds a specific threshold can be heard. A volume threshold may be configured as a preset volume threshold, to acquire a high-volume sound source signal.

With reference to the second aspect or any one of the foregoing possible implementations, in another possible implementation, the plurality of encoded audio signals include only the audio signal that meets the screening condition at the listening position. A specific implementation of decoding, by the decoder side, the audio signal that meets the screening condition, to obtain a decoded signal is: The decoder side decodes each of the plurality of audio signals to obtain the decoded signal.

With reference to the second aspect or any one of the foregoing possible implementations, in another possible implementation, the plurality of encoded audio signals include audio signals corresponding to all sound sources at the listening position, and the audio signal processing method provided in this application may further include: The decoder side receives indication information sent by the encoder side, where the indication information is used to indicate a sound source signal that meets the screening condition and that is in the plurality of encoded audio signals; and the decoder side finds, from the plurality of encoded audio signals based on the indication information, the audio signal indicated by the indication information as the audio signal that meets the screening condition.

With reference to the second aspect or any one of the foregoing possible implementations, in another possible implementation, the indication information may include characteristic information of each audio signal in the plurality of encoded audio signals, where the characteristic information includes volume information or position information of a sound source corresponding to the audio signal. The decoder side selects, based on the characteristic information, the audio signal that meets the screening condition to perform decoding.

With reference to the second aspect or any one of the foregoing possible implementations, in another possible implementation, the indication information may include an identifier of the audio signal that meets the screening condition and that is in the plurality of encoded audio signals. The decoder side finds, from the plurality of encoded audio signals, an audio signal indicated by the identifier as the audio signal that meets the screening condition.

With reference to the second aspect or any one of the foregoing possible implementations, in another possible implementation, the sound channel transfer function may include an HRTF function or a BRIR function. A type of the sound channel transfer function is not specifically limited in this application.

With reference to the second aspect or any one of the foregoing possible implementations, in another possible implementation, in a streaming transmission scenario, that the decoder side decodes the audio signal that meets the screening condition, to obtain the decoded signal specifically includes: The decoder side downloads the audio signal that meets the screening condition, and decodes the downloaded audio signal to obtain the decoded signal. According to a third aspect of this application, an audio signal processing apparatus is provided. The apparatus may include an acquisition unit, an encoding unit, and a sending unit. The acquisition unit is configured to acquire at least one audio signal at a listening position, where each of the at least one acquired audio signal has a corresponding sound source, and the at least one acquired audio signal includes at least an audio signal that meets a screening condition; the screening condition includes one or more of the following conditions: volume at the listening position is greater than or equal to a volume threshold, a listening distance between the sound source corresponding to the audio signal and the listening position is less than or equal to a preset listening distance, or the sound source corresponding to the audio signal is in a range corresponding to a listening orientation; an encoding unit, configured to encode the acquired audio signal to obtain an encoded audio signal; and a sending unit, configured to send the encoded audio signal to a decoder side.

According to the audio signal processing apparatus provided in this application, the audio signal that meets the screening condition at the listening position is acquired, so that the decoder side decodes only the audio signal that meets the screening condition. Therefore, the screening condition for ensuring audio signal quality may be configured. When there are a relatively large quantity of sound sources, transmission of audio signals not only ensures audio signal quality, but also greatly reduces power consumption of the decoder side.

It should be noted that the audio signal processing apparatus provided in the third aspect of this application is configured to implement the audio signal processing method provided in the first aspect or any one of the possible implementations of the first aspect. Therefore, for a specific implementation of the audio signal processing apparatus provided in the third aspect of this application, refer to the first aspect or any one of the possible implementations of the first aspect. Details are not described herein again.

According to a fourth aspect of this application, another audio signal processing apparatus is provided. The apparatus may include a receiving unit, a decoding unit, and a rendering unit. The receiving unit is configured to receive a plurality of encoded audio signals, where the plurality of audio signals are audio signals at a listening position, each audio signal has a corresponding sound source, and the plurality of audio signals include at least an audio signal that meets a screening condition; the screening condition includes one or more of the following conditions: volume at the listening position is greater than or equal to a volume threshold, a listening distance between the sound source corresponding to the audio signal and the listening position is less than or equal to a preset listening distance, or the sound source corresponding to the audio signal is in a range corresponding to a listening orientation; a decoding unit, configured to decode the audio signal that meets the screening condition, to obtain a decoded signal; and a rendering unit, configured to render, based on a sound channel transfer function in a playing device, the decoded signal that is obtained by the decoding unit, to obtain an output signal.

According to the audio signal processing apparatus provided in this application, the decoder side decodes only the audio signal, in a sound field, that corresponds to the sound source and that meets the screening condition. When there are a relatively large quantity of sound sources in the sound field, as long as a screening condition for ensuring audio quality is configured, transmission of audio signals not only ensures audio signal quality, but also greatly reduces power consumption of the decoder side.

It should be noted that the audio signal processing apparatus provided in the fourth aspect of this application is configured to implement the audio signal processing method provided in the second aspect or any one of the possible implementations of the second aspect. Therefore, for a specific implementation of the audio signal processing apparatus provided in the fourth aspect of this application, refer to the second aspect or any one of the possible implementations of the second aspect. Details are not described herein again.

According to a fifth aspect of this application, this application provides an audio signal processing apparatus. The audio signal processing apparatus may implement a function of the encoder side in the foregoing method examples. The function may be implemented by hardware, or may be implemented by hardware executing corresponding software. The hardware or the software includes one or more modules corresponding to the foregoing functions. The audio signal processing apparatus may exist in a form of a chip product.

With reference to the fifth aspect, in a possible implementation, a structure of the audio signal processing apparatus includes a processor and a transceiver. The processor is configured to support the audio signal processing apparatus to perform a corresponding function in the foregoing methods. The transceiver is configured to support communication between the audio signal processing apparatus and another device. The audio signal processing apparatus may further include a memory, and the memory is configured to be coupled to the processor and store program instructions and data that are necessary for the audio signal processing apparatus.

According to a sixth aspect of this application, this application provides another audio signal processing apparatus. The audio signal processing apparatus may implement a function of the decoder side in the foregoing method examples. The function may be implemented by hardware, or may be implemented by hardware executing corresponding software. The hardware or the software includes one or more modules corresponding to the foregoing functions. The audio signal processing apparatus may exist in a form of a chip product.

With reference to the sixth aspect, in a possible implementation, a structure of the audio signal processing apparatus includes a processor and a transceiver. The processor is configured to support the audio signal processing apparatus to perform a corresponding function in the foregoing methods. The transceiver is configured to support communication between the audio signal processing apparatus and another device. The audio signal processing apparatus may further include a memory, and the memory is configured to be coupled to the processor and store program instructions and data that are necessary for the audio signal processing apparatus.

According to a seventh aspect of this application, an encoder is provided. The encoder includes the audio signal processing apparatus that performs the audio signal processing method provided in the first aspect or any one of the possible implementations of the first aspect. The encoder may be used by the encoder side in this embodiment of this application.

According to an eighth aspect of this application, a decoder is provided. The decoder includes the audio signal processing apparatus that performs the audio signal processing method provided in the second aspect or any one of the possible implementations of the second aspect. The decoder may be used by the decoder side in this embodiment of this application.

According to a ninth aspect of this application, an audio signal processing system is provided. The system includes the encoder provided in the seventh aspect and/or the decoder provided in the eighth aspect.

According to a tenth aspect of this application, a computer-readable storage medium including instructions is provided. When the instructions are run on a computer, the computer is enabled to perform the audio signal processing method provided in any one of the foregoing aspects or the possible implementations.

According to an eleventh aspect of this application, a computer program product including instructions is provided.

When the computer program product runs on a computer, the computer is enabled to perform the audio signal processing method provided in any one of the foregoing aspects or the possible implementations.

It should be noted that various possible implementations of any one of the foregoing aspects may be combined as long as the solutions are not contradictory.

## BRIEF DESCRIPTION OF DRAWINGS

FIG. 1 is a schematic diagram of an audio signal processing method according to a conventional technology;

FIG. 2 is a schematic diagram of an architecture of an audio and video system according to a conventional technology;

FIG. 3 is a schematic diagram of a structure of an audio signal processing apparatus according to an embodiment of this application;

FIG. 4 is a flowchart of an audio signal processing method according to an embodiment of this application;

FIG. 5 is a schematic flowchart of another audio signal processing method according to an embodiment of this application;

FIG. 6 is a schematic diagram of a structure of another audio signal processing apparatus according to an embodiment of this application;

FIG. 7 is a schematic diagram of a structure of still another audio signal processing apparatus according to an embodiment of this application;

FIG. 8 is a schematic diagram of a structure of yet another audio signal processing apparatus according to an embodiment of this application; and

FIG. 9 is a schematic diagram of a structure of still yet another audio signal processing apparatus according to an embodiment of this application.

## DESCRIPTION OF EMBODIMENTS

In the specification, claims, and accompanying drawings of this application, terms such as "first", "second", "third", and "fourth" are intended to distinguish between different objects but do not indicate a particular order.

In the embodiments of this application, the word such as "example" or "for example" is used to give an example, an illustration, or a description. Any embodiment or design scheme described as an "example" or "for example" in the embodiments of this application should not be explained as being more preferred or having more advantages than another embodiment or design scheme. Exactly, use of the word "example", "example", or the like is intended to present a relative concept in a specific manner.

One or more of A, B, and C described in the embodiments of this application are used to represent the following concepts: A, or B, or C, or A and B, or A and C, or B and C, or A, B, and C.

Before the solutions provided in this application are described, a conventional audio signal processing process is first described.

The conventional audio signal processing process includes: An encoder device selects, based on an applying scenario, a corresponding device to acquire audio signals corresponding to all sound sources in a current sound field, encodes all the acquired audio signals, and transmits encoded audio signals to a decoder side. The decoder side decodes and renders all the received audio signals to obtain output signals. If a playing device is a speaker array, the decoder renders the output signals as a multi-channel speaker signal. If the playing device is a headphone device, the decoder renders the output signals as a binaural output signal.

Encoding and decoding may be performed using coding manners, such as currently common enhanced voice services (enhance voice services, EVS), adaptive multi-rate wideband (adaptive multi-rate wideband, AMRWB), and adaptive multi-rate (Adaptive Multi-Rate, AMR). The multi-channel speaker signal is obtained by rendering by a renderer based on a specific quantity of speakers. The binaural output signal is obtained by the renderer by using the multi-channel speaker signal and HRTF/BRIR rendering. It should be noted that the foregoing coding manners used for encoding and decoding are merely an example, and another audio coding manner may also be used in an actual application.

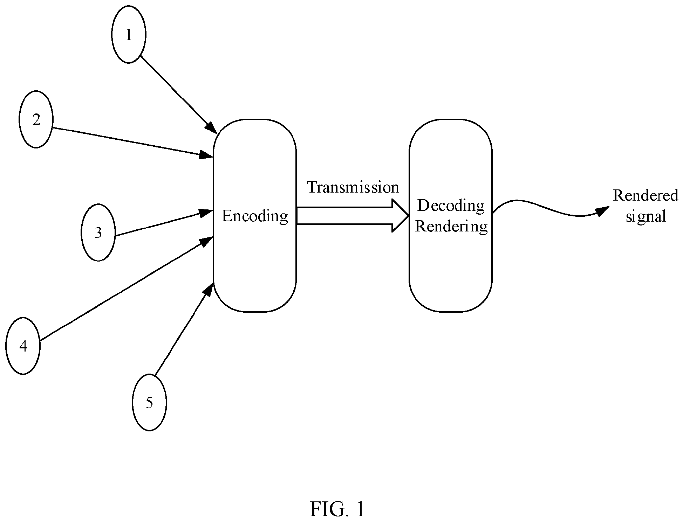

FIG. 1 shows a current audio signal processing process. An example of five sound sources (1-5 shown in FIG. 1) in a sound field is used to describe the current audio signal processing process with reference to FIG. 1.

An EVS codec is used as an example. Audio signals corresponding to the five sound sources are respectively denoted as S1(n), S2(n), S3(n), S4(n), and S5(n), which are respectively EVS-encoded into five bitstream signals S1S(n), S2S(n), S3S(n), S4S(n), and S5S(n). The five bitstream signals are connected in a frame-to-frame adjacency manner, and are sent after channel coding.

After receiving the encoded bitstream signals, a decoder first performs channel decoding to obtain the five bitstreams S1S(n), S2S(n), S3S(n), S4S(n), and S5S(n). An EVS decoder decodes the bitstreams to obtain five signals DS1(n), DS2(n), DS3(n), DS4(n), and DS5(n).

Convolution processing is separately performed on the five signals based on respective corresponding HRTF signals (*HRTF*1(*n*), *HRTF*2(*n*), *HRTF*3(*n*), *HRTF*3(*n*), and *HRTF*4(*n*)) in sound channel transfer functions (HRTF functions) selected by a listening apparatus, to obtain convolution results Y1(n), Y2(n), Y3(n), Y4(n), and Y5(n). A specific convolution is denoted as:

$$Y1(n) = DS1(n) \otimes HRTF1(n);$$

$$Y2(n) = DS2(n) \otimes HRTF2(n);$$

$$Y3(n) = DS3(n) \otimes HRTF3(n);$$

$$Y4(n) = DS4(n) \otimes HRTF4(n);$$

$$Y5(n) = DS5(n) \otimes HRTF5(n).$$

Finally, the convolution results are superimposed to obtain a final binaural (binaural) output signal *Y*(*n*). A calculation expression of *Y*(*n*) may be:

$$Y(n) = Y1(n) + Y2(n) + Y3(n) + Y4(n) + Y5(n).$$

In the foregoing audio signal processing process, the encoder side acquires, encodes, and transmits all the audio signals corresponding to the sound sources to the decoder side, and the decoder side decodes and renders all the received audio signals. When there are a relatively large quantity of sound source signals, power consumption of the decoder side is very high.

To resolve the foregoing problem, an embodiment of this application provides an audio signal processing method. Basic principles of the method are as follows: The decoder side selects an audio signal that meets a screening condition to perform decoding. This method replaces the conventional-technology method in which the decoder side decodes audio signals corresponding to all sound sources. When there are a large quantity of sound sources, power consumption of the decoder side is reduced. In addition, as long as the screening condition is properly configured, quality of audio signal transmission can still be well ensured while reducing the power consumption, to ensure a listening effect.

Before the solutions of this application are described, terms in this application are first explained.

A position of a listener (position of the listener) is a position at which the listener (listener) is located. A listening orientation is an orientation toward which the listener at the listening position faces. The listener may be a user who actually uses a playing device, or may be a virtual user who uses the playing device. The virtual user who uses the playing device may be at any possible listening position, and may be in any possible listening orientation.

A listening distance is a straight-line distance between a sound source and the listening position. Alternatively, the listening distance may be a distance of a preset path between the sound source and the listening position. The preset path may be a distance of bypassing an obstacle or another distance. This is not specifically limited in this application. The following describes implementations of the embodiments of this application in detail with reference to the accompanying drawings.

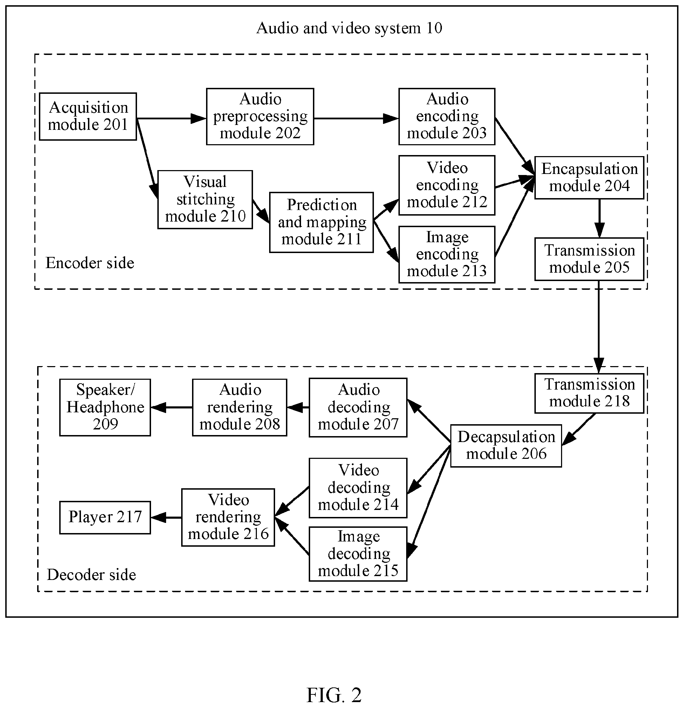

The audio signal processing method provided in this application is applied to an audio and video system 10 shown in FIG. 2. The audio and video system 10 includes an end-to-end audio signal processing part and an end-to-end video signal processing part. The audio and video system 10 may be a VR system, an AR system, an MR system, or another streaming transmission system. Certainly, an actual form of the audio and video system 10 is not specifically limited in this embodiment of this application.

As shown in FIG. 2, the end-to-end audio signal processing part of the audio and video system 10 may include an acquisition (acquisition) module 201, an audio preprocessing (audio preprocessing) module 202, an audio encoding (audio encoding) module 203, an encapsulation module (file/segment encapsulation) 204, a delivery (delivery) module 205/218, a decapsulation module (file/segment decapsulation) 206, an audio decoding module (audio decoding) 207, an audio rendering module (audio rendering) 208, and a speaker/headphone (loudspeakers/headphones) 209.

As shown in FIG. 2, the end-to-end video signal processing part included in the audio and video system 10 may include: an acquisition (acquisition) module 201, a visual stitching (visual stitching) module 210, a prediction and mapping (projection and mapping) module 211, a video encoding (video encoding) module 212, an image encoding module (image encoding) 213, an encapsulation module (file/segment encapsulation) 204, a delivery module (delivery) 205/218, a decapsulation module (file/segment decapsulation) 206, a video decoding module (video decoding) 214, an image decoding module (image decoding) 215, a video rendering module (visual rendering) 216, and a player (display) 217.

It should be noted that some modules are common modules for the end-to-end audio signal processing part and the end-to-end video signal processing part included in the audio and video system 10.

The following briefly describes functions of the modules in the audio and video system 10 shown in FIG. 2: The acquisition module 201 is configured to acquire an audio signal corresponding to a sound source, and transmit the audio signal to the audio preprocessing module 202.

The audio preprocessing module 202 is configured to preprocess the audio signal, for example, perform filtering processing, and transmit the preprocessed audio signal to the audio encoding module 203.

The audio encoding module 203 is configured to encode the preprocessed audio signal, and transmit an encoded audio signal to the encapsulation module 204.

The acquisition module 201 is further configured to acquire a video signal. After the video combination module 210, the prediction and mapping module 211, the video encoding module 212, and the image encoding module 213 process the video signal, the encoded video signal is transmitted to the encapsulation module 204.

The encapsulation module 204 is configured to encapsulate the encoded audio signal and the encoded video signal to obtain a bitstream. The bitstream is transmitted through the delivery module 205 to the delivery module 218 on the decoder side, and then is transmitted by the delivery module 218 to the decapsulation module 206. For example, the delivery module 205 and the delivery module 218 may be wired communications modules or wireless communications modules. This is not specifically limited in this embodiment of this application.

It should be noted that, when the audio and video system 10 is a streaming transmission system, the delivery module 205 may be specifically implemented in a form of a server. To be specific, the encoder side uploads the bitstream to the server, and the decoder side downloads the bitstream from the server according to a requirement, to implement a function of the delivery module 205. Details of this process are not described again.

The decapsulation module 206 is configured to decapsulate the bitstream to obtain the encoded audio signal and the encoded video signal, transmit the encoded audio signal to the audio decoding module 207, and transmit the encoded video signal to the video decoding module 214 and the image decoding module 215.

The audio decoding module 207 is configured to decode the encoded audio signal, and transmit a decoded audio signal to the audio rendering module 208.

The audio rendering module 208 is configured to perform rendering processing on the decoded audio signal, and transmit a rendered output signal to the speaker/headphone 209.

The video decoding module 214, the image decoding module 215, and the video rendering module 216 process the encoded video signal, and transmit a processed video signal to the player 217 for playing.

It should be noted that a structure shown in FIG. 2 does not constitute a limitation on the audio and video system 10. The audio and video system 10 may include more or fewer components than those shown in the figure, or combine some components, or have different component arrangements. Although not shown, the audio and video system 10 may further include a sensor and the like. The sensor is configured to obtain a listening position and/or a listening orientation. Details are not described herein.

It should be further noted that the end-to-end video signal processing part and the end-to-end audio signal processing system in the audio and video system 10 shown in FIG. 2 may be independently deployed. Details are not described in this application.

The following describes the technical solutions of this application in detail with reference to the accompanying drawings.

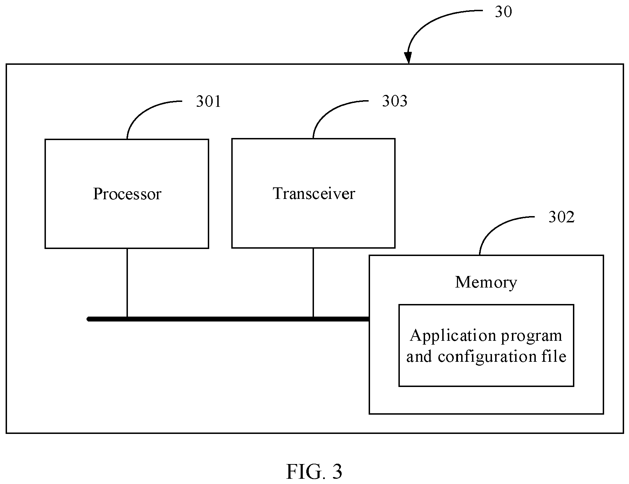

According to one aspect, this application provides an audio signal processing apparatus. FIG. 3 shows an audio signal processing apparatus 30 related to the embodiments of this application. The audio signal processing apparatus 30 may be deployed as a functional unit on the encoder side in the audio and video system 10, or may be deployed as a functional unit on the decoder side in the audio and video system 10. This is not specifically limited in this embodiment of this application. Certainly, the audio signal processing apparatus 30 may also be the encoder side or the decoder side in the audio and video system. Alternatively, the audio signal processing apparatus 30 may be a chip system. In this embodiment of this application, the chip system may include a chip, or may include a chip and another discrete component.

As shown in FIG. 3, the audio signal processing apparatus 30 may include a processor 301, a memory 302, and a transceiver 303.

The following describes components of the audio signal processing apparatus 30 in detail with reference to FIG. 3.

The memory 302 may be a volatile memory (volatile memory), for example, a RAM, or may be a non-volatile memory, for example, a read-only memory (read-only memory, ROM), a flash memory (flash memory), an HDD, an SSD, or a combination of the foregoing types of memories. The memory 302 is configured to store program code and a configuration file that can implement the method in this application.

As a control center of the audio signal processing apparatus 30, the processor 301 may be a CPU or an ASIC, or may be configured as one or more integrated circuits for implementing this embodiment of this application, for example, one or more DSPs or one or more FPGAs. The processor 301 may run or execute software programs and/or modules stored in the memory 302 and invoke data stored in the memory 302, to perform various functions of the audio signal processing apparatus 30.

The transceiver 303 is configured to implement interaction between the audio signal processing apparatus 30 and another unit. For example, the transceiver 303 may be a transceiver port of the audio signal processing apparatus 30. Further, the audio signal processing apparatus 30 may further include a sensor 304, configured to obtain a listening position and/or a listening orientation. For example, the sensor 304 may be a gyroscope, an external camera, a motion detection apparatus, an image detection apparatus, or the like. This is not limited in this embodiment of this application. Specifically, when the audio signal processing apparatus 30 is deployed on the encoder side, or when the audio signal processing apparatus 30 is the encoder side, the processor 301 performs the following functions by running or executing a software program and/or a module stored in the memory 302 and invoking data stored in the memory 302:
acquiring at least one audio signal at a listening position, where each of the at least one acquired audio signal has a corresponding sound source, and the at least one acquired audio signal includes at least an audio signal that meets a screening condition; the screening condition includes one or more of the following conditions: volume at the listening position is greater than or equal to a volume threshold, a listening distance between the sound source corresponding to the audio signal and the listening position is less than or equal to a preset listening distance, or the sound source corresponding to the audio signal is in a range corresponding to a listening orientation; encoding the acquired audio signal to obtain an encoded audio signal; and sending the encoded audio signal to the decoder side by using the transceiver 303.

The method, apparatus, device, or system provided in the embodiment of this application may be applied to a real-time audio signal processing scenario and a non-real-time audio signal processing scenario. When the audio signal processing apparatus 30 is applied to the real-time audio signal processing scenario, the listening position is on the decoder side, that is, a current position of a listener (listener). Specifically, the current position of the listener (listener) may be in range of a game scene, a sound field, a movie scene, a conference scenario, or another applying scenario. To better reproduce an audio of the encoder side for the listener on the decoder side, the encoder side may acquire an audio signal based on the current position of the listener (that is, the listening position) sent by the decoder side, so that the audio acquired by the encoder side can match the current position of the listener. When the method is applied to the non-real-time audio signal processing scenario, the listening position is a preset position. Because the listener may be at any position within the range of the applying scenario, some listening positions may be preset, and the encoder side may acquire an audio signal based on the preset listening position. In this case, when performing decoding processing on the audio signal, the decoder side may select, based on the current position of the listener, an audio signal that best matches (for example, a same position or a closest position) to perform decoding processing. Specifically, when the audio signal processing apparatus 30 is deployed on the decoder side, or when the audio signal processing apparatus 30 is the decoder, the processor 301 performs the following functions by running or executing a software program and/or a module stored in the memory 302 and invoking data stored in the memory 302:
receiving, by using the transceiver 303, a plurality of encoded audio signals, where the plurality of audio signals are audio signals at the listening position, each audio signal has a corresponding sound source, and the plurality of audio signals include at least an audio signal that meets a screening condition, where the screening condition may include one or more of the following conditions: volume at the listening position is greater than or equal to a volume threshold, a listening distance between the sound source corresponding to the audio signal and the listening position is less than or equal to a preset listening distance, or the sound source corresponding to the audio signal is in a range corresponding to a listening orientation; decoding an audio signal that meets the screening condition, to obtain a decoded signal; and rendering the decoded signal based on a sound channel transfer function in a playing device, to obtain an output signal.

According to another aspect, an embodiment of this application provides an audio signal processing method. This method is applied to an interaction process between the encoder side and the decoder side of the end-to-end audio signal processing part in the audio and video system 10 shown in FIG. 2, to process an audio signal in a sound field. The operation performed by the encoder side/decoder side described in the following may be performed by the encoder side/decoder side itself, or may be performed by a functional module on the encoder side/decoder side, which is not elaborated in the following.

It should be noted that, when the encoder side and the decoder side described herein interact with each other, they may directly communicate and interact with each other, or may interact with each other by uploading interaction content to a shared medium and downloading the interaction content from the shared medium. This is collectively referred to as sending/receiving in this application, and details are not described subsequently. The shared medium may be a server, a cloud server, or the like.

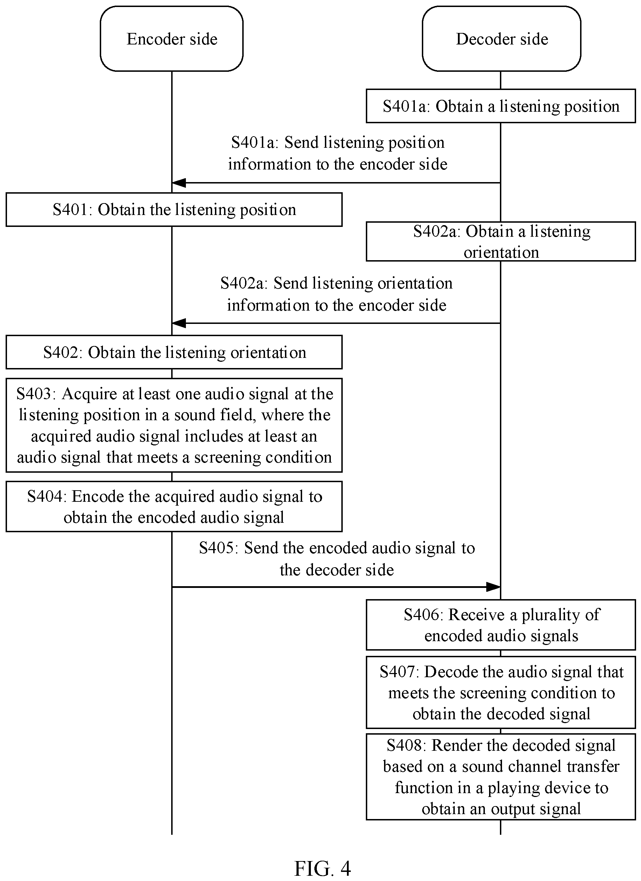

As shown in FIG. 4, the audio signal processing method may include the following steps.

S401: The encoder side obtains a listening position.

The audio signal processing includes a real-time audio signal processing scenario and a non-real-time audio signal processing scenario. In any scenario, the listening position is not fixed due to mobility of a user.

The following describes implementation of S401 in the real-time audio signal processing scenario and the non-real-time audio signal processing scenario.

1. Real-time audio signal processing scenario

In the real-time audio signal processing scenario, a listening position is a position at which a listener is currently located in a sound field. A listening orientation is an orientation toward which the listener at the listening position faces. The listening position may be provided by the decoder side to the encoder side.

Therefore, before S401, as shown in FIG. 4, the audio signal processing method provided in this embodiment of this application may further include S401a.

S401a: The decoder side obtains the listening position, and sends listening position information to the encoder side. Specifically, the decoder side may obtain, by using a sensor or an apparatus for obtaining a position, the position at which the listener is currently located in the sound field. An implementation of obtaining the listening position by the decoder is not specifically limited in this embodiment of this application.

The listening position information is used to indicate the listening position obtained by the decoder side, and content of the listening position information may be configured based on an actual requirement. This is not limited in this embodiment of this application.

For example, the listening position information may be coordinate information or a position identifier. An identifier of each position in the sound field is preset. A specific listening position may be uniquely determined by using the identifier.

Corresponding to S401a, S401 may be specifically implemented as follows: The encoder side receives the listening position information from the decoder side, where the listening position information is used to indicate the listening position; and the encoder determines, based on the listening position information, the position at which the listener is located in the sound field.

In the real-time audio signal processing scenario, the decoder side may provide one or more listening positions for the decoder side. This is not specifically limited in this embodiment of this application.

2. Non-real-time audio signal processing scenario

In the non-real-time audio signal processing scenario, the listening position may be any position in the sound field. Therefore, in the non-real-time audio signal processing scenario, the encoder side needs to acquire audio signals at a plurality of possible listening positions in advance. In this case, the listening position may be any one of the plurality of preset positions.

Therefore, in the non-real-time audio signal processing scenario, S401 may be specifically implemented as follows: The encoder side determines each possible listening position in the sound field. Specifically, each possible listening position may be determined based on the plurality of preset positions, or each possible listening position may be determined by using a preset algorithm based on a current processing scenario.

Optionally, in the audio signal processing method provided in this embodiment of this application, only the listening position may be considered. In this case, S403 is performed after S401. Alternatively, according to the audio signal processing method provided in this embodiment of this application, the listening orientation may be referenced based on the listening position. In this case, S402 needs to be first performed after S401, and then S403 is performed. S402: The encoder side obtains the listening orientation.

The listening orientation is the orientation toward which the user at the listening position faces. The listening orientation is not fixed due to mobility of the user.

The following describes implementation of S402 in the real-time audio signal processing scenario and the non-real-time audio signal processing scenario.

In the real-time audio signal processing scenario, the listening orientation is provided by the decoder side to the encoder side. Therefore, before S402, as shown in FIG. 4, the audio signal processing method provided in this embodiment of this application may further include S402a.

S402a: The decoder side obtains the listening orientation, and sends listening orientation information to the encoder side.

Specifically, the decoder may obtain, by using the sensor or the apparatus for obtaining a position, an orientation toward which the listener at the current position in the sound field faces, and use the orientation as the listening orientation. An implementation of obtaining the listening orientation by the decoder side is not specifically limited in this embodiment of this application.

The listening orientation information is used to indicate the listening orientation obtained by the decoder side, and content of the listening orientation information may be configured based on an actual requirement. This is not limited in this embodiment of this application.

For example, the listening orientation information may be an orientation identifier, or the listening orientation information may be an included angle between the listening orientation and a reference orientation.

Corresponding to S402a, S402 may be specifically implemented as follows: The encoder side receives the listening orientation information from the decoder side, and the encoder side determines the listening orientation of the listener in the sound field based on the listening orientation information.

It should be noted that in the real-time audio signal processing scenario, S401 and S402 may be combined for implementation. This process is not specifically limited in this application.

In the non-real-time audio signal processing scenario, the listening orientation is each possible orientation of each listening position. Therefore, in the non-real-time audio signal processing scenario, there are a plurality of listening positions, and there are a plurality of listening orientations at each listening position.

Therefore, in the non-real-time signal processing scenario, S402 may be specifically implemented as follows: The encoder side determines each listening orientation at each possible listening position in the sound field.

S403: The encoder side acquires at least one audio signal at the listening position in the sound field, where the at least one acquired audio signal includes at least an audio signal that meets a screening condition.

In S403, each acquired audio signal has a corresponding sound source in the sound field.

Specifically, in S403, the encoder side acquires only the audio signal that meets the screening condition at the listening position in the sound field.

It should be noted that when there are a plurality of listening positions, the encoder side performs S403 at each listening position. A process of performing S403 at only one listening position is described herein, but this shall not be construed as a limitation herein.

Specifically, the encoder side performs S403 by using at least one audio signal acquisition apparatus. The audio signal acquisition apparatus may be a microphone or another apparatus. This is not specifically limited in this embodiment of this application.

The screening condition may include one or more of the following conditions: volume at the listening position is greater than or equal to a volume threshold, a listening distance between the sound source and the listening position is less than or equal to a preset listening distance, or the sound source is in a range corresponding to a listening orientation. Certainly, content of the screening condition may be alternatively configured based on an actual requirement. This is not specifically limited in this embodiment of this application.

In a possible implementation, only an audio signal whose volume exceeds a specific threshold can be heard. The threshold varies with a position relationship between a sound source and a listening orientation. A volume threshold may be configured as a threshold determined based on a position relationship between a sound source and a listening orientation.

In a possible implementation, volume thresholds corresponding to different position relationships may be preconfigured. The volume threshold is determined based on the position relationship in S403.

The position relationship may be at least one of a relative orientation relationship or a relative distance relationship between a sound source and a listening orientation. For example, the sound source is located in the front or rear of the listening orientation, and the sound source is located on the left or right side of the listening orientation. Alternatively, the position relationship may be an angle relationship between a sound source and a listening orientation. For example, a sound source is located 50 degrees to the right of a listening orientation, and a sound source is located 0 degrees to the right (straight ahead) of a listening orientation.

For example, Table 1 shows a preset correspondence between a position relationship and a volume threshold. In an actual application, a volume threshold corresponding to a position relationship is obtained through lookup. For example, when a sound source is located 30 degrees to the right of a listening orientation, and a straight-line distance between the sound source and a listening position is 0.35 meter, it is determined, by looking up Table 1, that a corresponding volume threshold is a threshold 20.

**Table 1**

| Orientation / Straight-line distance | 0 degrees to the left | 30 degrees to the left | 60 degrees to the left | 90 degrees to the left | 30 degrees to the right | ... |
|---|---|---|---|---|---|---|
| 0 meters to 0.1 meter | Threshold 1 | Threshold 2 | Threshold 3 | Threshold 4 | Threshold 5 | ... |
| 0.1 meter to 0.2 meter | Threshold 6 | Threshold 7 | Threshold 8 | Threshold 9 | Threshold 10 | ... |
| 0.2 meter to 0.3 meter | Threshold 11 | Threshold 12 | Threshold 13 | Threshold 14 | Threshold 15 | ... |
| 0.3 meter to 0.4 meter | Threshold 16 | Threshold 17 | Threshold 18 | Threshold 19 | Threshold 20 | ... |
| ... | ... | ... | ... | ... | ... | ... |

It should be noted that Table 1 describes, by way of example, and not limitation, a manner of determining the volume threshold.

In another possible implementation, a preset position relationship algorithm may be preconfigured for the volume threshold, and then the volume threshold is obtained according to the preset algorithm and based on the position relationship between the sound source and the listening position.

Certainly, for a specific implementation of obtaining volume thresholds corresponding to different position relationships, an implementation solution may be selected based on an actual requirement. This is not specifically limited in this embodiment of this application.

In another possible implementation, only a sound source whose volume exceeds a specific threshold can be heard. A volume threshold may be configured as a preset volume threshold, to acquire a high-volume audio signal. Impact of a listening orientation on a listening effect is not considered in this possible implementation.

It may be understood that the volume threshold may also be set by the listener and sent by the decoder side to the encoder side. Likewise, the listening distance may also be set by the listener and sent by the decoder side to the encoder side.

It should be noted that a specific value of the volume threshold may be configured based on an actual requirement. This is not specifically limited in this embodiment of this application.

The range corresponding to the listening orientation may include a range of all orientations or a range of a preset angle. This is not specifically limited in this application. A specific value of the preset angle may be configured based on an actual requirement. This is not specifically limited in this embodiment of this application.

S404: The encoder encodes the acquired audio signal to obtain an encoded audio signal.

It should be noted that, for an encoding process, refer to encoding in the audio signal processing process shown in FIG. 1. Details are not described herein again.

S405: The encoder sends the encoded audio signal to the decoder side.

Specifically, the encoder side sends the encoded audio signal to the decoder side through the delivery module 205 in the audio and video system 10 shown in FIG. 2. The delivery module 205 may be a transmission line, or the like. This is not specifically limited in this embodiment of this application. A plurality of encoded audio signals may also be referred to as a set of audio signals.

S406: The decoder side receives the plurality of encoded audio signals.

It should be noted that the plurality of encoded audio signals received by the decoder side in S406 are the encoded audio signals sent by the encoder side in S405.

The plurality of encoded audio signals include only the audio signal that meets the screening condition at the listening position in the sound field. The listening position herein may be the listening position provided by the decoder side in the real-time audio signal processing scenario, or may include each listening position in the sound field in the non-real-time audio signal processing scenario.

S407: The decoder side decodes the audio signal that meets the screening condition to obtain a decoded signal.

Specifically, because the plurality of encoded audio signals received in S406 include only the sound source signal that meets the screening condition, the decoder side decodes each received audio signal to obtain a decoded signal in S407. For a decoding process, refer to decoding in the audio signal processing process shown in FIG. 1. Details are not described herein again.

S408: The decoder side renders the decoded signal based on a sound channel transfer function in a playing device to obtain an output signal.

Specifically, in S408, the decoder side performs convolution on each decoded signal based on a sound channel transfer function of the decoded signal in the playing device, to obtain one or more output signals.

Specifically, the decoded signal is rendered in S408. In the audio signal processing process shown in FIG. 1, if the playing device is a speaker array, the output signals are rendered as a multi-channel speaker signal. If the playing device is a headphone device, the output signals are rendered as a binaural output signal.

Optionally, the sound channel transfer function may include an HRTF function or a BRIR function. Certainly, a type of the sound channel transfer function may be configured based on an actual requirement. This is not specifically limited in this embodiment of this application.

After S408, the decoder side may play the output signals by using the playing device. Certainly, the playing device may be disposed inside or outside the decoder side. This is not specifically limited in this embodiment of this application.

According to the audio signal processing method provided in this application, the encoder side acquires only the audio signal that meets the screening condition in the sound field, and then encodes and sends the audio signal to the decoder side. The decoder side decodes the received audio signal that meets the screening condition. Therefore, the screening condition for ensuring audio signal quality is configured to ensure audio quality of the audio signals acquired by the encoder side, and the decoder side does not need to decode all the audio signals. When there are a relatively large quantity of sound sources in the sound field, compared with the conventional technology in which all sound source signals are decoded, this method greatly reduces power consumption of the decoder side.

According to still another aspect, an embodiment of this application provides another audio signal processing method. This method is applied to an interaction process between the encoder side and the decoder side of the end-to-end audio signal processing part in the audio and video system 10 shown in FIG. 2, to process an audio signal in a sound field. The operation performed by the encoder side/decoder side described in the following may be performed by the encoder side/decoder side itself, or may be performed by a functional module on the encoder side/decoder side, which is not elaborated in the following.

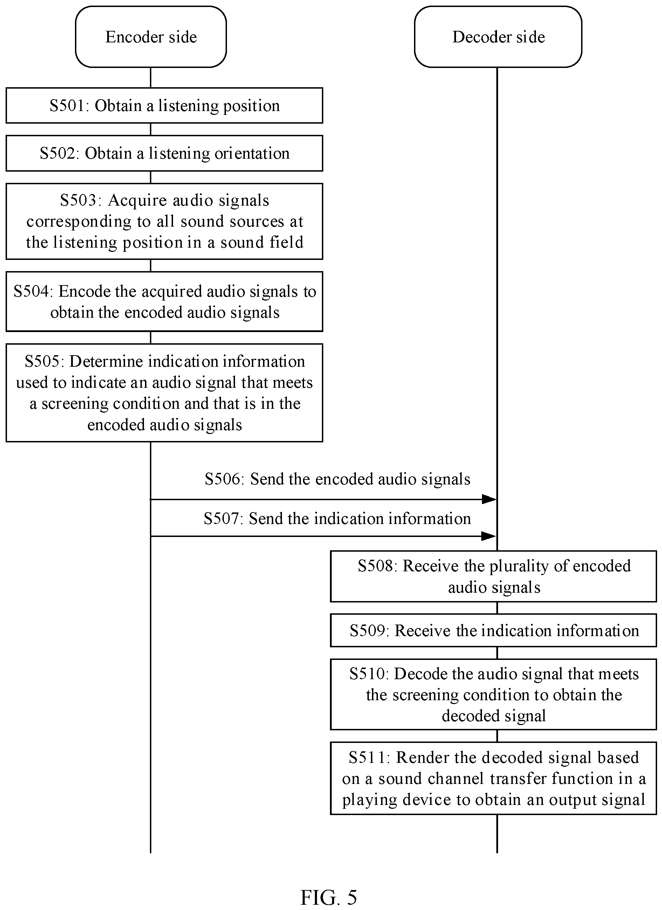

As shown in FIG. 5, the audio signal processing method may include the following steps.

S501: The encoder side obtains a listening position.

Specifically, S501 is the same as S401. For a specific implementation, refer to S401. Details are not described herein again.

Optionally, in the audio signal processing method provided in this embodiment of this application, only the listening position may be considered. In this case, S503 is performed after S501. Alternatively, according to the audio signal processing method provided in this embodiment of this application, a listening orientation may be referenced based on the listening position. In this case, S502 needs to be first performed after S501, and then S503 is performed.

S502: The encoder side obtains the listening orientation.

Specifically, S502 is the same as S402. For a specific implementation, refer to S402. Details are not described herein again.

S503: The encoder side acquires audio signals corresponding to all sound sources at the listening position in the sound field.

It should be noted that when there are a plurality of listening positions, the encoder performs S503 at each listening position. A process of performing S503 at only one listening position is described, but this shall not be construed as a limitation herein.

Specifically, the encoder side performs S503 by using at least one audio signal acquisition apparatus. The audio signal acquisition apparatus may be a microphone or another apparatus. This is not specifically limited in this embodiment of this application.

S504: The encoder encodes the acquired audio signals to obtain encoded audio signals.

It should be noted that, for an encoding process, refer to encoding in the audio signal processing process shown in FIG. 1. Details are not described herein again.

S505: The encoder determines indication information used to indicate an audio signal that meets a screening condition and that is in the encoded audio signal.

It should be noted that the screening condition has been described in detail in S403, and details are not described herein again.

In a possible implementation, the indication information may include characteristic information of each audio source signal in the encoded audio signals, and the characteristic information includes volume information or position information of a sound source corresponding to the audio signal.

Specifically, the encoder side may acquire the characteristic information of the audio signal by using a sensor or another apparatus. A specific implementation is not limited in this application.

The volume information is used to indicate volume of the sound source. The volume information may be a specific volume value, may be a volume level, or may certainly be other content. Any volume information indicating the volume of the sound source falls inside the scope of the volume information described herein.

The position information of the sound source corresponding to the volume signal is used to indicate a specific position of the sound source in the sound field. The position information may be coordinates, may be a position identifier, or may certainly be other content. Any position information indicating the specific position of the sound source in the sound field falls inside the scope of the position information described herein.

In another possible implementation, the indication information may include an identifier of the audio signal that meets the screening condition and that is in the encoded audio signal.

The identifier of the audio signal is used to uniquely indicate the audio signal. A type of the identifier of the audio signal is not specifically limited in this application. For example, the identifier of the audio signal may be a position or a sequence of the audio signal in the encoded audio signals.

S506: The encoder sends the encoded audio signals to the decoder side.

Specifically, the encoder side sends the encoded audio signals to the decoder side through the delivery module 205 in the audio and video system 10 shown in FIG. 2. The delivery module 205 may be a transmission line, or the like. This is not specifically limited in this embodiment of this application.

S507: The encoder sends the indication information to the decoder side.

It should be noted that S506 and S507 may be performed together, or may be performed separately. This is not specifically limited in this application. When S506 and S507 are performed separately, they are not subject to a specific sequence. FIG. 5 is merely an example.

S508: The decoder side receives the plurality of encoded audio signals.

It should be noted that the plurality of encoded audio signals received by the decoder side in S508 are the encoded audio signals sent by the encoder side in S506.

The plurality of encoded audio signals received in S508 not only include the audio signal that meets the screening condition at the listening position in the sound field, but also include another audio signal that does not meet the screening condition.

S509: The encoder side receives the indication information sent by the encoder side.

It should be noted that S508 and S509 may be performed together, or may be performed separately. This is not specifically limited in this application. When S508 and S509 are performed separately, they are not subject to a specific sequence. FIG. 5 is merely an example.

S510: The decoder side decodes the audio signal that meets the screening condition to obtain the decoded signal.

In S510, the decoder side performs screening, based on the received indication information, on the plurality of encoded audio signals received in S508, to obtain the audio signal that meets the screening condition at the listening position, and performs decoding to obtain the decoded signal.

In a possible implementation, when the indication information is the characteristic information of each of the plurality of audio signals, in S510, the encoder side determines, based on the characteristic information, whether each audio signal meets the screening condition, and finds the audio signal that meets the screening condition.

In another possible implementation, when the indication information is the identifier of the audio signal that meets the screening condition, in S510, the encoder side performs screening and finds an audio signal indicated by the indication information, and uses the audio signal as the audio signal that meets the screening condition.

S511: The decoder side renders the decoded signal based on a sound channel transfer function in a playing device to obtain an output signal.

Specifically, S511 is the same as S408. For a specific implementation, refer to S408. Details are not described herein again.

According to the audio signal processing method provided in this application, the encoder side acquires the audio signals corresponding to all the sound sources, encodes the audio signals, and sends the encoded audio signals to the decoder side. At the same time, the encoder side indicates, to the decoder side by using the indication information, the audio signal that meets the screening condition. The decoder side selects, according to the indication information provided by the encoder side, the audio signal that meets the screening condition to perform decoding. When there are a relatively large quantity of sound sources, as long as a screening condition for ensuring audio signal quality is configured, transmission of audio signals not only ensures audio signal quality, but also greatly reduces power consumption of the decoder side.

It should be noted that an execution sequence of the steps included in the audio signal processing method provided in this embodiment of this application may be configured based on a requirement. The execution sequence in the accompanying drawings is merely an example, but this shall not be construed as a limitation herein.

The foregoing mainly describes the solutions provided in the embodiments of this application from a perspective of interaction between network elements. It may be understood that to implement the foregoing functions, the decoder side and the encoder side include corresponding hardware structures and/or software modules for performing the functions. A functional unit that implements the foregoing audio signal processing method on the decoder side and the encoder side is referred to as an audio signal processing apparatus. Persons skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on a particular application and a design constraint of the technical solutions. Persons skilled in the art may use different methods to implement the described functions for each particular application, but it should not be considered that the implementation goes beyond the scope of this application.

In the embodiments of this application, the audio signal processing apparatus may be divided into functional modules based on the foregoing method examples. For example, functional modules may be obtained through division based on corresponding functions, or two or more functions may be integrated into one processing module. The module into which the functions are integrated may be implemented in a form of hardware, or may be implemented in a form of a software functional module. It should be noted that, in the embodiments of this application, division into modules is an example, and is merely a logical function division. In an actual implementation, another division manner may be used.

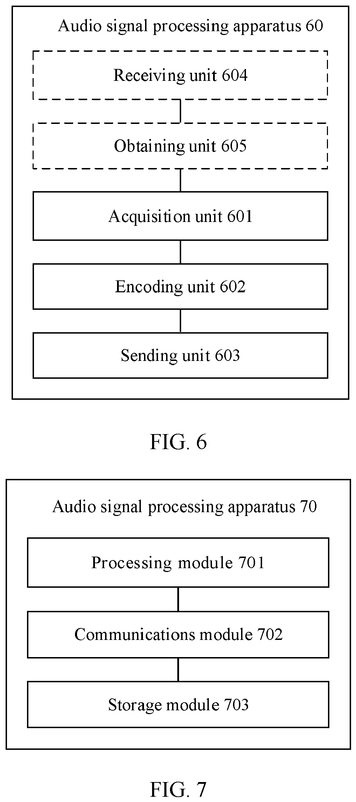

When the functional modules are obtained through division based on the corresponding functions, FIG. 6 is a schematic diagram of a possible structure of an audio signal processing apparatus 60 deployed on the encoder side in the foregoing embodiments. The audio signal processing apparatus 60 may be deployed on the encoder in the audio and video system 10 as a functional unit. The audio signal processing apparatus 60 may be the encoder side itself, or may be a functional module or a chip on the encoder side. As shown in FIG. 6, the audio signal processing apparatus 60 may include an acquisition unit 601, an encoding unit 602, and a sending unit 603. The acquisition unit 601 is configured to perform the process of S403 in FIG. 4 and the process of S503 in FIG. 5. The encoding unit 602 is configured to perform the process of S404 in FIG. 4 or the process of S504 in FIG. 5. The sending module 603 is configured to perform the process of S405 in FIG. 4 or the processes of S506 and S507 in FIG. 5. All related content of the steps in the foregoing method embodiments may be cited in function descriptions of corresponding functional modules. Details are not described herein again. When the signal processing apparatus 60 is deployed on the encoder side in the audio and video system 10, the acquisition unit 601 may include the acquisition module 201 on the encoder side in the audio and video system 10, the encoding unit 602 may include the audio encoding module 203 on the encoder side in the audio and video system 10, and the sending unit 603 may include the delivery module 205 belonging to the encoder side in the audio and video system 10.

Further, as shown in FIG. 6, the audio signal processing apparatus 60 may further include a receiving unit 604 and an obtaining unit 605. The obtaining unit 605 may use the receiving unit 604 to perform the processes of S401 and S402 in FIG. 4 or the processes of S501 and S502 in FIG. 5. Alternatively, the obtaining unit 605 may be configured to perform the processes of S401 and S402 in FIG. 4 or the processes of S501 and S502 in FIG. 5.

When the unit into which the functions are integrated is used, FIG. 7 is a schematic diagram of a possible structure of an audio signal processing apparatus 70 in the foregoing embodiments. The audio signal processing apparatus 70 may be deployed as a functional unit on the encoder side in the audio and video system 10. The audio signal processing apparatus 70 may be the encoder side itself, or may be a functional module or a chip on the encoder side. The audio signal processing apparatus 70 may include a processing module 701 and a communications module 702. The processing module 701 is configured to control and manage an action of the audio signal processing apparatus 70. For example, the processing module 701 is configured to perform the processes of S401, S402, S403, and S404 in FIG. 4, or the processes of S501, S502, S503, S504, and S505 in FIG. 5. The communications module 702 is configured to perform the process of S405 in FIG. 4, or the processes of S506 and S507 in FIG. 5. The audio signal processing apparatus 70 may further include a storage module 703, configured to store program code and data of the audio signal processing apparatus 70. When the signal processing apparatus 70 is deployed on the encoder side in the audio and video system 10, the processing module 701 may include the acquisition module 201, the audio preprocessing module 202, and the audio encoding module 203 on the encoder side in the audio and video system 10. The communications module 702 may include the delivery module 205 belonging to the encoder side in the audio and video system 10. The processing module 701 may be the processor 301 in a physical structure of the audio signal processing apparatus 30 shown in FIG. 3, and may be a processor or a controller. For example, the processing module may be a CPU, a general-purpose processor, a DSP, an ASIC, an FPGA or another programmable logic device, a transistor logic device, a hardware component, or any combination thereof. The processor may implement or execute various example logical blocks, modules, and circuits described with reference to content disclosed in this application. Alternatively, the processor 701 may be a combination of processors implementing a computing function, for example, a combination of one or more microprocessors, or a combination of a DSP and a microprocessor. The communications module 702 may be the transceiver 303 in the physical structure of the audio signal processing apparatus 30 shown in FIG. 3. The communications module 702 may be a communications port, or may be a transceiver, a transceiver circuit, a communications interface, or the like. Alternatively, the communications interface may communicate with another device through the foregoing element that has a transceiver function. The foregoing element that has the transceiver function may be implemented through an antenna and/or a radio frequency apparatus. The storage module 703 may be the memory 302 in the physical structure of the audio signal processing apparatus 30 shown in FIG. 3.

When the processing module 701 is the processor, the communications module 702 is the transceiver, and the storage module 703 is the memory, the audio signal processing apparatus 70 shown in FIG. 7 in this embodiment of this application may be the audio signal processing apparatus 30 shown in FIG. 3.

As described above, the audio signal processing apparatus 60 or the audio signal processing apparatus 70 provided in the embodiments of this application may be configured to implement the functions of the encoder side in the methods implemented in the foregoing embodiments of this application. For ease of description, only a part related to this embodiment of this application is shown. For specific technical details that are not disclosed, refer to the embodiments of this application.

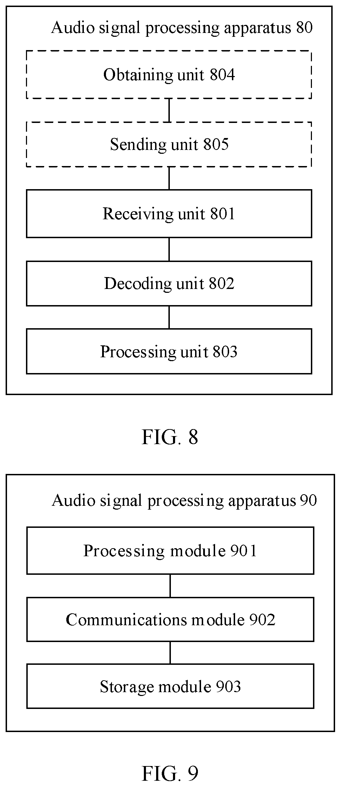

When the functional modules are obtained through division based on the corresponding functions, FIG. 8 is a schematic diagram of a possible structure of an audio signal processing apparatus 80 deployed on the decoder side in the foregoing embodiments. The audio signal processing apparatus 80 may be deployed on the decoder side in the audio and video system 10 as a functional unit. The audio signal processing apparatus 80 may be the decoder side itself, or may be a functional module or a chip on the decoder side. As shown in FIG. 8, the audio signal processing apparatus 80 may include a receiving unit 801, a decoding unit 802, and a processing unit 803. The receiving unit 801 is configured to perform the process of S406 in FIG. 4, or the processes of S508 and S509 in FIG. 5. The decoding unit 802 is configured to perform the process of S407 in FIG. 4 or the process of S510 in FIG. 5. The processing unit 803 is configured to perform the process of S408 in FIG. 4 or the process of S511 in FIG. 5. All related content of the steps in the foregoing method embodiments may be cited in function descriptions of corresponding functional modules. Details are not described herein again. When the signal processing apparatus 80 is deployed on the decoder side in the audio and video system 10, the receiving unit 801 may include the delivery module 218 on the decoder side in the audio and video system 10, the decoding unit 802 may include the audio decoding module 207 on the decoder side in the audio and video system 10, and the processing unit 803 may include the audio rendering module 208 on the decoder side in the audio and video system 10.

Further, as shown in FIG. 8, the audio signal processing apparatus 80 may further include an obtaining unit 804 and a sending unit 805. The obtaining unit 804 and the sending unit 805 are configured to perform the processes of S401a and S402a in FIG. 4.

When the unit into which the functions are integrated is used, FIG. 9 is a schematic diagram of a possible structure of an audio signal processing apparatus 90 deployed on the decoder side in the foregoing embodiments. The audio signal processing apparatus 90 may be deployed on the decoder side in the audio and video system 10 as a functional unit. The audio signal processing apparatus 90 may be the decoder side itself, or may be a functional module or a chip on the decoder side. The audio signal processing apparatus 90 may include a processing module 901 and a communications module 902. The processing module 901 is configured to control and manage an action of the audio signal processing apparatus 90. For example, the processing module 901 is configured to perform the processes of S407, S408, and S401a in FIG. 4, or the processes of S510 and S511 in FIG. 5. The communications module 902 is configured to perform the process of S406 in FIG. 4, or the processes of S508 and S509 in FIG. 5. The audio signal processing apparatus 90 may further include a storage module 903, configured to store program code and data of the audio signal processing apparatus 90. When the signal processing apparatus 90 is deployed on the decoder side in the audio and video system 10, the processing module 901 may include the audio decoding module 207 and the audio rendering module 208 on the decoder side in the audio and video system 10, and the communications module 902 may include the delivery module 218 in the audio and video system 10.

The processing module 901 may be the processor 301 in a physical structure of the audio signal processing apparatus 30 shown in FIG. 3, and may be a processor or a controller. For example, the processing module may be a CPU, a general-purpose processor, a DSP, an ASIC, an FPGA or another programmable logic device, a transistor logic device, a hardware component, or any combination thereof. The processor may implement or execute various example logical blocks, modules, and circuits described with reference to content disclosed in this application. Alternatively, the processor 901 may be a combination for implementing a computing function, for example, a combination including one or more microprocessors, a combination of a DSP and a microprocessor, or the like. The communications module 902 may be the transceiver 303 in the physical structure of the audio signal processing apparatus 30 shown in FIG. 3. The communications module 902 may be a communications port, or may be a transceiver, a transceiver circuit, a communications interface, or the like. Alternatively, the communications interface may communicate with another device through the foregoing element that has a transceiver function. The foregoing element that has the transceiver function may be implemented via an antenna and/or a radio frequency apparatus. The storage module 903 may be the memory 302 in the physical structure of the audio signal processing apparatus 30 shown in FIG. 3.

When the processing module 901 is the processor, the communications module 902 is the transceiver, and the storage module 903 is the memory, the audio signal processing apparatus 90 shown in FIG. 9 in this embodiment of this application may be the audio signal processing apparatus 30 shown in FIG. 3.

As described above, the audio signal processing apparatus 80 or the audio signal processing apparatus 90 provided in the embodiments of this application may be configured to implement the functions of the decoder side in the methods implemented in the foregoing embodiments of this application. For ease of description, only a part related to this embodiment of this application is shown. For specific technical details that are not disclosed, refer to the embodiments of this application.

In another implementation of this embodiment, a computer-readable storage medium is provided. The computer-readable storage medium stores instructions. When the instructions are executed, the audio signal processing method in the foregoing method embodiments is performed.

In another implementation of this embodiment, a computer program product including instructions is provided. When the instructions are executed, the audio signal processing method in the foregoing method embodiments is performed. It may be clearly understood by persons skilled in the art that, for the purpose of convenient and brief description, for a detailed working process of the foregoing system, apparatus, and unit, refer to a corresponding process in the foregoing method embodiments. Details are not described herein again.

Persons skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communications medium, where the communications medium includes any medium that facilitates transmission of a computer program from one place to another. The storage medium may be any available medium accessible by a general purpose or dedicated computer. It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in electrical or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit. The integrated unit may be implemented in a form of hardware, or may be implemented in a form of hardware plus a software functional unit. When the foregoing integrated unit is implemented in a form of a software function unit, the integrated unit may be stored in a computer-readable storage medium. The software function unit is stored in a storage medium and includes several instructions for instructing a computer device (which may be a personal computer, a server, a network device, or the like) to perform some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

**Claims**

1.  An audio signal processing method, comprising:

    acquiring at least one audio signal at a listening position, wherein each of the at least one acquired audio signal has a corresponding sound source, and the at least one acquired audio signal comprises at least an audio signal that meets a screening condition; the screening condition comprises one or more of the following conditions: volume at the listening position is greater than or equal to a volume threshold, a listening distance between the sound source and the listening position is less than or equal to a preset listening distance, or the sound source is in a range corresponding to a listening orientation;
    encoding the acquired audio signal to obtain an encoded audio signal; and
    sending the encoded audio signal to a decoder side.

2.  The method according to claim 1, wherein the volume threshold comprises:
    a preset volume threshold or a threshold determined based on a position relationship between the sound source and the listening orientation.

3.  The method according to claim 1 or 2, wherein before the acquiring at least one audio signal at a listening position, the method further comprises:
    receiving listening position information sent by the decoder side, wherein the listening position information is used to indicate the listening position.

4.  The method according to any one of claims 1 to 3, wherein the acquired audio signal comprises only the audio signal that meets the screening condition, and when the screening condition comprises that the sound source is in a range corresponding to a listening orientation, before the acquiring at least one audio signal at a listening position, the method further comprises:
    receiving listening orientation information sent by the decoder side, wherein the listening orientation information is used to indicate the listening orientation.

5.  The method according to any one of claims 1 to 4, wherein the acquired audio signal comprises an audio signal that does not meet the screening condition, and the method further comprises:
    sending indication information to the decoder side, wherein the indication information is used to indicate an audio signal that meets the screening condition and that is in the encoded audio signal.

6.  The method according to claim 5, wherein the indication information comprises:

    characteristic information of each audio signal in the encoded audio signal, wherein the characteristic information comprises volume information or position information of a sound source corresponding to the audio signal; or
    an identifier of the audio signal that meets the screening condition and that is in the encoded audio signal.

7.  An audio signal processing method, comprising:

    receiving a plurality of encoded audio signals, wherein the plurality of audio signals are audio signals at a listening position, each audio signal has a corresponding sound source, and the plurality of audio signals comprise at least an audio signal that meets a screening condition; the screening condition comprises one or more of the following conditions: volume at the listening position is greater than or equal to a volume threshold, a listening distance between the sound source and the listening position is less than or equal to a preset listening distance, or the sound source is in a range corresponding to a listening orientation;
    decoding the audio signal that meets the screening condition, to obtain a decoded signal; and
    rendering the decoded signal based on a sound channel transfer function in a playing device to obtain an output signal.

8.  The method according to claim 7, wherein the volume threshold comprises:
    a preset volume threshold or a threshold determined based on a position relationship between the sound source and the listening orientation.

9. The method according to claim 7 or 8, wherein before the receiving a plurality of encoded audio signals, the method further comprises:
sending listening position information to an encoder side, so that the encoder side obtains the plurality of encoded audio signals based on the listening position information, wherein the listening position information is used to indicate the listening position.

10. The method according to any one of claims 7 to 9, wherein the plurality of audio signals comprise an audio signal that does not meet the screening condition, and before the decoding the audio signal that meets the screening condition, to obtain a decoded signal, the method further comprises:

receiving indication information sent by the encoder side, wherein the indication information is used to indicate the audio signal that meets the screening condition and that is in the plurality of audio signals;
the decoding the audio signal that meets the screening condition, to obtain a decoded signal comprises:

finding, from the plurality of audio signals based on the indication information, the audio signal that meets the screening condition; and
decoding the audio signal that is found and that meets the screening condition, to obtain the decoded signal.

11. The method according to claim 10, wherein the indication information comprises:

characteristic information of each of the plurality of audio signals, wherein the characteristic information comprises volume information or position information of a sound source corresponding to the audio signal; or
an identifier of the audio signal that meets the screening condition and that is in the plurality of audio signals.

12. The method according to any one of claims 7 to 11, wherein the plurality of audio signals comprise only the audio signal that meets the screening condition, and when the screening condition comprises that a sound source is in a range corresponding to a listening orientation, before the receiving a plurality of encoded audio signals, the method further comprises:
sending listening orientation information to the encoder side, so that the encoder side obtains the plurality of encoded audio signals based on the orientation information, wherein the listening orientation information is used to indicate the listening orientation.

13. The method according to any one of claims 7 to 12, wherein the sound channel transfer function comprises:
a head-related transfer function HRTF or a binaural room impulse response BRIR function.

14. An audio signal processing apparatus, comprising:

an acquisition unit, configured to acquire at least one audio signal at a listening position, wherein each of the at least one acquired audio signal has a corresponding sound source, and the at least one acquired audio signal comprises at least an audio signal that meets a screening condition; the screening condition comprises one or more of the following conditions: volume at the listening position is greater than or equal to a volume threshold, a listening distance between the sound source and the listening position is less than or equal to a preset listening distance, or the sound source is in a range corresponding to a listening orientation;
an encoding unit, configured to encode the acquired audio signal to obtain an encoded audio signal; and
a sending unit, configured to send the encoded audio signal to a decoder side.

15. The apparatus according to claim 14, wherein the volume threshold comprises:
a preset volume threshold or a threshold determined based on a position relationship between the sound source and the listening orientation.

16. The apparatus according to claim 14 or 15, wherein the apparatus further comprises:
a receiving unit, configured to receive listening position information sent by the decoder side, wherein the listening position information is used to indicate the listening position.

17. The apparatus according to any one of claims 14 to 16, wherein the acquired audio signal comprises only the audio signal that meets the screening condition, and when the screening condition comprises that the sound source is in a range corresponding to a listening orientation, the apparatus further comprises:
a receiving unit, configured to receive listening orientation information sent by the decoder side, wherein the listening orientation information is used to indicate the listening orientation.

18. The apparatus according to any one of claims 14 to 17, wherein the acquired audio signal comprises an audio signal that does not meet the screening condition, and the sending unit is further configured to:
send indication information to the decoder side, wherein the indication information is used to indicate an audio signal that meets the screening condition and that is in the encoded audio signal.

19. The apparatus according to claim 18, wherein the indication information comprises:

characteristic information of each audio signal in the encoded audio signal, wherein the characteristic information comprises volume information or position information of a sound source corresponding to the audio signal; or an identifier of the audio signal that meets the screening condition and that is in the encoded audio signal.

20. An audio signal processing apparatus, comprising:

a receiving unit, configured to receive a plurality of encoded audio signals, wherein the plurality of audio signals are audio signals at a listening position, each audio signal has a corresponding sound source, and the plurality of audio signals comprise at least an audio signal that meets a screening condition; the screening condition comprises one or more of the following conditions: volume at the listening position is greater than or equal to a volume threshold, a listening distance between the sound source and the listening position is less than or equal to a preset listening distance, or the sound source is in a range corresponding to a listening orientation; a decoding unit, configured to decode the audio signal that meets the screening condition, to obtain a decoded signal; and
a rendering unit, configured to render, based on a sound channel transfer function in a playing device, the decoded signal that is obtained by the decoding unit, to obtain an output signal.

21. The apparatus according to claim 20, wherein the volume threshold comprises:
a preset volume threshold or a threshold determined based on a position relationship between the sound source and the listening orientation.

22. The apparatus according to claim 20 or 21, wherein the apparatus further comprises:
a sending unit, configured to send listening position information to an encoder side, so that the encoder side obtains the plurality of encoded audio signals based on the listening position information, wherein the listening position information is used to indicate the listening position.

23. The apparatus according to any one of claims 20 to 22, wherein the plurality of audio signals comprise an audio signal that does not meet the screening condition, and the receiving unit is further configured to:

receive indication information sent by the encoder side, wherein the indication information is used to indicate the audio signal that meets the screening condition and that is in the plurality of audio signals;
the decoding unit is specifically configured to: find, from the plurality of audio signals based on the indication information that is received by the receiving unit, the audio signal that meets the screening condition; and decode the audio signal that is found and that meets the screening condition, to obtain the decoded signal.

24. The apparatus according to claim 23, wherein the indication information comprises:

characteristic information of each of the plurality of audio signals, wherein the characteristic information comprises volume information or position information of a sound source corresponding to the audio signal; or an identifier of the audio signal that meets the screening condition and that is in the plurality of audio signals.

25. The apparatus according to any one of claims 20 to 24, wherein the plurality of audio signals comprise only the audio signal that meets the screening condition, and when the screening condition comprises that a sound source is in a range corresponding to a listening orientation, the apparatus further comprises a sending unit, configured to:
send listening orientation information to the encoder side, so that the encoder side obtains the plurality of encoded audio signals based on the orientation information, wherein the listening orientation information is used to indicate the listening orientation.

26. The apparatus according to any one of claims 20 to 25, wherein the sound channel transfer function comprises:

a head-related transfer function HRTF or a binaural room impulse response BRIR function.

27. An audio signal processing apparatus, comprising a memory, a processor, and a program that is stored in the memory and that can run on the processor, wherein when executing the program, the processor implements the audio signal processing method according to any one of claims 1 to 13.

28. A computer-readable storage medium, comprising instructions, wherein when the instructions are run on a computer, the computer is enabled to perform the audio signal processing method according to any one of claims 1 to 13.

29. A computer program, wherein the computer program is used to cause a computer to perform the audio signal processing method according to any one of claims 1 to 13.

FIG. 1

Audio and video system 10

Encoder side

Acquisition module 201 → Audio preprocessing module 202 → Audio encoding module 203

Acquisition module 201 → Visual stitching module 210 → Prediction and mapping module 211 → Video encoding module 212

Prediction and mapping module 211 → Image encoding module 213

Audio encoding module 203 → Encapsulation module 204

Video encoding module 212 → Encapsulation module 204

Image encoding module 213 → Encapsulation module 204

Encapsulation module 204 → Transmission module 205

Decoder side

Speaker/ Headphone 209 ← Audio rendering module 208 ← Audio decoding module 207 ← Decapsulation module 206

Transmission module 218 → Decapsulation module 206

Decapsulation module 206 → Video decoding module 214 → Video rendering module 216

Decapsulation module 206 → Image decoding module 215 → Video rendering module 216

Video rendering module 216 → Player 217

FIG. 2

30

301 303

| Processor | Transceiver |

302

Memory

Application program
and configuration file

FIG. 3

Encoder side

Decoder side

S401a: Obtain a listening position

S401a: Send listening position information to the encoder side

S401: Obtain the listening position

S402a: Obtain a listening orientation

S402a: Send listening orientation information to the encoder side

S402: Obtain the listening orientation

S403: Acquire at least one audio signal at the listening position in a sound field, where the acquired audio signal includes at least an audio signal that meets a screening condition

S404: Encode the acquired audio signal to obtain the encoded audio signal

S405: Send the encoded audio signal to the decoder side

S406: Receive a plurality of encoded audio signals

S407: Decode the audio signal that meets the screening condition to obtain the decoded signal

S408: Render the decoded signal based on a sound channel transfer function in a playing device to obtain an output signal

FIG. 4

```
┌─────────────────┐                          ┌─────────────────┐
│   Encoder side  │                          │   Decoder side  │
└─────────────────┘                          └─────────────────┘
         │                                            │
┌─────────────────────────────────┐                  │
│ S501: Obtain a listening position│                 │
└─────────────────────────────────┘                  │
         │                                            │
┌─────────────────────────────────┐                  │
│S502: Obtain a listening orientation│               │
└─────────────────────────────────┘                  │
         │                                            │
┌─────────────────────────────────┐                  │
│   S503: Acquire audio signals    │                 │
│ corresponding to all sound sources at│             │
│ the listening position in a sound field│           │
└─────────────────────────────────┘                  │
         │                                            │
┌─────────────────────────────────┐                  │
│S504: Encode the acquired audio signals to│         │
│  obtain the encoded audio signals │                │
└─────────────────────────────────┘                  │
         │                                            │
┌─────────────────────────────────┐                  │
│S505: Determine indication information│              │
│used to indicate an audio signal that meets│         │
│  a screening condition and that is in the │         │
│        encoded audio signals      │                │
└─────────────────────────────────┘                  │
         │                                            │
         │  S506: Send the encoded audio signals      │
         │───────────────────────────────────────────▶│
         │  S507: Send the indication information      │
         │───────────────────────────────────────────▶│
         │                            ┌─────────────────────────────────┐
         │                            │ S508: Receive the plurality of encoded│
         │                            │           audio signals          │
         │                            └─────────────────────────────────┘
         │                                            │
         │                            ┌─────────────────────────────────┐
         │                            │S509: Receive the indication information│
         │                            └─────────────────────────────────┘
         │                                            │
         │                            ┌─────────────────────────────────┐
         │                            │S510: Decode the audio signal that meets│
         │                            │   the screening condition to obtain the│
         │                            │           decoded signal         │
         │                            └─────────────────────────────────┘
         │                                            │
         │                            ┌─────────────────────────────────┐
         │                            │S511: Render the decoded signal based│
         │                            │on a sound channel transfer function in a│
         │                            │playing device to obtain an output signal│
         │                            └─────────────────────────────────┘
         │                                            │
```

FIG. 5

Audio signal processing apparatus 60

Receiving unit 604

Obtaining unit 605

Acquisition unit 601

Encoding unit 602

Sending unit 603

FIG. 6

Audio signal processing apparatus 70

Processing module 701

Communications module 702

Storage module 703

FIG. 7

Audio signal processing apparatus 80

Obtaining unit 804

Sending unit 805

Receiving unit 801

Decoding unit 802

Processing unit 803

FIG. 8

Audio signal processing apparatus 90

Processing module 901

Communications module 902

Storage module 903

FIG. 9

## INTERNATIONAL SEARCH REPORT

| | International application No. |
|---|---|
| | **PCT/CN2019/128908** |

| A. | CLASSIFICATION OF SUBJECT MATTER |
|---|---|

A63F 13/54(2014.01)i;  H04S 7/00(2006.01)i

According to International Patent Classification (IPC) or to both national classification and IPC

| B. | FIELDS SEARCHED |
|---|---|

Minimum documentation searched (classification system followed by classification symbols)

A63F 13,H04S

Documentation searched other than minimum documentation to the extent that such documents are included in the fields searched

Electronic data base consulted during the international search (name of data base and, where practicable, search terms used)

CNABS; CNTXT; VEN; CNKI; 百度学术; BAIDU: 声源, 音源, 音频源, 三维, 音频, 重现, 虚拟现实, 位置, 距离, 朝向, 方位, 筛选, 选择, 选取, 功耗, 计算量, 3d , audio, virtual reality, render, source, position, distance, direction, orientation, select, cull, cost

| C. | DOCUMENTS CONSIDERED TO BE RELEVANT |
|---|---|

| Category* | Citation of document, with indication, where appropriate, of the relevant passages | Relevant to claim No. |
|---|---|---|
| X | LI, Xin et al. "OsgAL-Based Sound Source Management in Simulation Games" *Intelligence Computation and Evolutionary Computation*, 01 January 2012 (2012-01-01), parts 2 and 3 | 1-6, 14-19, 27-29 |
| Y | LI, Xin et al. "OsgAL-Based Sound Source Management in Simulation Games" *Intelligence Computation and Evolutionary Computation*, 01 January 2012 (2012-01-01), parts 2 and 3 | 7-13, 20-26 |
| Y | WO 2018084770 A1 (DIRAC RES. AB) 11 May 2018 (2018-05-11) description, paragraphs [0077] and [0081]-[0089], and figure 12 | 7-13, 20-26 |
| A | CN 108744516 A (TENCENT TECHNOLOGY SHENZHEN CO., LTD.) 06 November 2018 (2018-11-06) entire document | 1-29 |
| A | CN 106843801 A (FUJIAN TIANYI NETWORK TECHNOLOGY CO., LTD.) 13 June 2017 (2017-06-13) entire document | 1-29 |

☑ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 March 2020** | **26 March 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2019/128908** |

**C. DOCUMENTS CONSIDERED TO BE RELEVANT**

| Category* | Citation of document, with indication, where appropriate, of the relevant passages | Relevant to claim No. |
|---|---|---|
| A | CN 105959905 A (BEIJING SHIDAITUOLING TECHNOLOGY CO., LTD.) 21 September 2016 (2016-09-21)<br>entire document | 1-29 |

Form PCT/ISA/210 (second sheet) (January 2015)

## INTERNATIONAL SEARCH REPORT
### Information on patent family members

International application No.

**PCT/CN2019/128908**

| Patent document cited in search report | | | Publication date (day/month/year) | Patent family member(s) | | | Publication date (day/month/year) |
|---|---|---|---|---|---|---|---|
| WO | 2018084770 | A1 | 11 May 2018 | EP | 3535987 | A1 | 11 September 2019 |
| | | | | EP | 3535988 | A1 | 11 September 2019 |
| | | | | WO | 2018084769 | A1 | 11 May 2018 |
| | | | | US | 2019278802 | A1 | 12 September 2019 |
| | | | | CN | 110192396 | A | 30 August 2019 |
| | | | | CN | 109997376 | A | 09 July 2019 |
| CN | 108744516 | A | 06 November 2018 | WO | 2019228038 | A1 | 05 December 2019 |
| CN | 106843801 | A | 13 June 2017 | CN | 106843801 | B | 17 September 2019 |
| CN | 105959905 | A | 21 September 2016 | CN | 105959905 | B | 24 October 2017 |

Form PCT/ISA/210 (patent family annex) (January 2015)

32

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910103595